(19) **Europäisches Patentamt**
**European Patent Office**
**Office européen des brevets**

(11) **EP 3 262 471 B1**

(12) **EUROPÄISCHE PATENTSCHRIFT**

(45) Veröffentlichungstag und Bekanntmachung des Hinweises auf die Patenterteilung:
**22.05.2019 Patentblatt 2019/21**

(21) Anmeldenummer: **16723033.3**

(22) Anmeldetag: **25.04.2016**

(51) Int Cl.:
*G05B 19/402* (2006.01)     *B23K 26/08* (2014.01)
*B23K 26/38* (2014.01)      *G01B 11/04* (2006.01)
*G06T 7/70* (2017.01)

(86) Internationale Anmeldenummer:
**PCT/EP2016/059202**

(87) Internationale Veröffentlichungsnummer:
**WO 2016/135350 (01.09.2016 Gazette 2016/35)**

(54) **VERFAHREN ZUR KORREKTUR EINES VORGEGEBENEN SCHNEIDWEGS ZUM SCHNEIDEN EINER BLECHPLATINE**

METHOD FOR CORRECTING A PREDETERMINED CUTTING PATH FOR CUTTING A SHEET METAL BLANK

PROCÉDÉ DE CORRECTION D'UNE TRAJECTOIRE DE COUPE PRÉDÉFINIE POUR DÉCOUPER UNE FEUILLE DE MÉTAL

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **23.02.2015 DE 102015203221**

(43) Veröffentlichungstag der Anmeldung:
**03.01.2018 Patentblatt 2018/01**

(73) Patentinhaber: **Schuler Pressen GmbH**
**91093 Heßdorf (DE)**

(72) Erfinder:
• **SEITZ, Alexander**
**91054 Erlangen (DE)**
• **GROSSE, Jan-Peter**
**91096 Möhrendorf (DE)**

(74) Vertreter: **Dr. Gassner & Partner mbB**
**Wetterkreuz 3**
**91058 Erlangen (DE)**

(56) Entgegenhaltungen:
**EP-A1- 0 474 034       WO-A1-2009/105608**
**DE-A1-102007 042 165   DE-A1-102013 203 384**

**Beschreibung**

Die Erfindung betrifft ein Verfahren zur Korrektur eines vorgegebenen Schneidwegs zum Schneiden einer Blechplatine aus einem in eine Transportrichtung kontinuierlich transportierten Blechband.

Die DE 10 2013 203 384 A1 offenbart ein Verfahren zur Korrektur eines vorgegebenen Schneidwegs zum Schneiden einer Blechplatine aus einem in eine Transportrichtung bzw. x-Richtung kontinuierlich transportierten Blechband mittels einer Laserschneideinrichtung. Der Schneidweg ist in einem Schneidprogramm durch eine Vielzahl aufeinanderfolgender Schneidweg-Koordinaten definiert. Zur Korrektur des Schneidwegs werden ständig mittels zweier in Transportrichtung aufeinanderfolgend angeordneter Bandkantenmesseinrichtungen Abweichungen der Bandkante in y-Richtung gemessen. Auf der Grundlage der in y-Richtung gemessenen Abweichungen werden sodann die Schneidweg-Koordinaten korrigiert. Ferner können mittels einer Wegmesseinrichtung Fluktuationen der Transportgeschwindigkeit erfasst und bei der Korrektur der Schneidweg-Koordinaten berücksichtigt werden.

Bei dem bekannten Verfahren wird stillschweigend davon ausgegangen, dass die Kante des Blechbands gerade verläuft. In der Praxis ist das allerdings nicht der Fall. Die Kante des Blechbands weist tatsächlich eine Welligkeit mit einer ersten Wellenlänge im Bereich von einigen Zentimetern bis zu mehreren Metern oder entsprechende Unebenheiten auf. Ferner kann die Bandkante eine sogenannte Säbeligkeit aufweisen, deren Krümmungsradius üblicherweise jenseits von 100 m liegt. - Insbesondere die vorerwähnte Welligkeit der Bandkante führt beim bekannten Verfahren dazu, dass die in y-Richtung gemessenen Abstandswerte nicht exakt die tatsächliche Abweichung einer Mittellinie des Blechbands von einer vorgegebenen y-Referenz wiedergeben. Infolgedessen ist die Korrektur der Schneidweg-Koordinaten nicht immer ausreichend. Das kann bei einer aus mehreren Teilschnitten hergestellten Kontur dazu führen, dass die Enden der jeweiligen Teilschnitte nicht exakt aufeinanderliegen bzw. ineinander übergehen.

Ein weiteres Verfahren zur Korrektur eines Schneidwegs zum Schneiden einer Blechplatine ist aus der WO 2009/105608 bekannt. Dabei werden Markierungen auf einer einer Laserschneidvorrichtung zugewandten Oberseite des Blechbands angebracht. Die Markierungen werden mittels einer oberhalb des Blechbands montierten Kamera erfasst. Aus einem Vergleich der aufeinander folgenden Bilder wird eine Abweichung der Markierungen in y-Richtung und damit eine Abweichung der Mittellinie des Blechbands von einer y-Referenz ermittelt. Die ermittelte Abweichung in y-Richtung wird zur Korrektur des Schneidwegs verwendet. - Bei dem bekannten Verfahren hängt die Genauigkeit der Korrektur von der Qualität der auf das Blechband aufgebrachten Markierungen ab. Es handelt sich dabei üblicherweise um aufgespritzte Farbpunkte, welche in der Praxis mitunter einen unregelmäßigen Umfang aufweisen. Das kann zu Ungenauigkeiten bei der Bestimmung der Abweichungen des Blechbands in y-Richtung führen. Ferner kann es sein, dass aufgespritzte Farbpunkte nicht ordnungsgemäß auf der Oberfläche des Blechbands haften, wodurch eine Korrektur der Schneidweg-Koordinaten unterbrochen und erheblich gestört werden kann. Schließlich müssen auf das Blechband aufgespritzte Farbpunkte nach dem Schneiden der Blechplatinen wieder aufwändig entfernt werden, weil sie ein späteres Lackieren der Blechplatine stören.

Das Dokument DE 10 2007 042 165 A1 schlägt eine Vorrichtung und ein Verfahren zum kombinierten Plan- und Hochkantrichten eines Blechbands vor. Dabei ist vorgesehen, dass eine Kantenführungseinrichtung relativ zu einer Walzenrichtmaschine quer zur Transportrichtung des Blechbands schwimmend gelagert ist.

Aus dem Dokument EP 0 474 034 A1 ist ein Verfahren zur Korrektur eines vorgegebenen Schneidwegs zum Schneiden von Tüchern zur Herstellung von Bekleidung, Polsterbezügen oder dgl. aus einem transportierten Ausgangsmaterial bekannt.

Das Schneiden einer Blechplatine aus einem Blechband ist allerdings dann problematisch, wenn das Blechband nicht parallel zur Transportrichtung eingespannt ist oder wenn das Blechband eine Säbeligkeit, d. h. eine Krümmung seiner Kante, aufweist.

Aufgabe der Erfindung ist es, die Nachteile nach dem Stand der Technik zu beseitigen. Es soll insbesondere ein Verfahren angegeben werden, welches eine besonders exakte Korrektur eines Schneidwegs bei einem kontinuierlich bewegten Blechband ermöglicht und damit die Präzision der Bearbeitung erhöht.

Diese Aufgabe wird durch die Merkmale der Patentansprüche 1 und 5 gelöst. Zweckmäßige Ausgestaltungen der Erfindung ergeben sich aus den Merkmalen der Patentansprüche 2 bis 4 und 6 bis 11.

Nach einem ersten Aspekt der Erfindung wird ein Verfahren zur Korrektur eines vorgegebenen Schneidwegs zum Schneiden einer Blechplatine aus einem in eine Transportrichtung x kontinuierlich transportierten Blechband mit folgenden Schritten vorgeschlagen:

Gleichzeitiges Bestimmen einer ersten x-Koordinate x1 und einer ersten y-Koordinate y1 eines Punkts einer Oberfläche des Blechbands bezüglich einer x- und y-Referenz,

Bestimmen einer zweiten Koordinate y2 des Punkts bezüglich der y-Referenz genau dann, wenn das Blechband bezüglich der ersten x-Koordinate x1 um einen vorgegebenen ersten Abstand dx1 in Transportrichtung x bewegt worden ist, Ermitteln eines ersten y-Korrekturwerts $K_y1$ durch Bildung einer Differenz zwischen der ersten y1 und der zweiten y-Koordinate y2 und

Korrektur von den vorgegebenen Schneidweg beschreibenden Schneidweg-Koordinaten unter Verwendung des ersten y-Korrekturwerts $K_y1$.

Erfindungsgemäß wird ein beliebiger Punkt auf der Oberfläche des Blechbands erfasst. Es kann sich dabei beispielsweise um einen Punkt an der Kante des Blechbands handeln. In Abkehr vom Stand der Technik werden bei der Erfassung des Punkts dessen ersten Ortskoordinaten x1y1 erfasst, und zwar bezüglich einer x- und einer y-Referenz. Wenn das Blechband um einen vorgegebenen Abstand dx1 in Transportrichtung x bewegt worden ist, werden zweite Ortskoordinaten x2y2 desselben Punkts erfasst, und zwar bezüglich der y-Referenz. Die x-Referenz ergibt sich beispielsweise aus dem fest vorgegebenen ersten Abstand dx1.

Indem erfindungsgemäß die Lageänderung eines durch erste Ortskoordinaten x1y1 definierten Punkts auf der Oberfläche des Blechbands beobachtet wird, können die Ungenauigkeiten der nach dem Stand der Technik bekannten Verfahren vermieden werden. Zur Durchführung des erfindungsgemäßen Verfahrens ist insbesondere nicht die Anbringung einer gesonderten Markierung auf dem Blechband erforderlich. Das vorgeschlagene Verfahren liefert auch dann präzise Korrekturwerte wenn die y-Koordinaten an einer Unebenheiten aufweisenden Kante des Blechbands bestimmt werden.

Mit dem erfindungsgemäßen Verfahren können Schneidwege zum Schneiden einer Blechplatine so genau korrigiert werden, dass die Enden von die Platine umgebenden Teilschnitten exakt ineinander übergehen. Es kann auf eine Nachbearbeitung der Platine im Bereich überlappender Enden von Teilschnitten verzichtet werden.

Nach einer vorteilhaften Ausgestaltung der Erfindung umfasst das Verfahren die folgenden weiteren Schritte:

Bereitstellen einer ersten y-Messeinrichtung zur Messung der ersten y-Koordinate y1 des Blechbands bezüglich der y-Referenz,

Bereitstellen einer zweiten y-Messeinrichtung zur Messung der zweiten y-Koordinate y2 des Blechbands bezüglich der y-Referenz, wobei die zweite y-Messeinrichtung im vorgegebenen ersten Abstand dx1 stromabwärts der ersten y-Messeinrichtung angeordnet ist, und

Bereitstellen einer ersten Wegmesseinrichtung zur Messung der x-Koordinaten des Blechbands bezüglich der x-Referenz.

Bei den ersten und der zweiten y-Messeinrichtungen handelt es sich vorteilhafterweise um Messeinrichtungen, mit denen ein Abstand der Bandkante von einer y-Referenz gemessen werden kann. Zweckmäßigerweise werden als erste und zweite y-Messeinrichtung baugleiche Messeinrichtungen verwendet. Bei den y-Messeinrichtungen kann es sich um herkömmliche Messeinrichtungen zur Erfassung der Lage einer Bandkante handeln. Vorzugsweise werden optische Messeinrichtungen zu diesem Zweck verwendet. Bei der ersten Wegmesseinrichtung handelt es sich vorteilhafterweise um einen mechanischen Wegaufnehmer mit einem am Blechband anliegenden Messrad. So kann der zurückgelegte Weg des Blechbands, insbesondere ein Versatz des Blechbands um den ersten Abstand dx1, genau erfasst werden. Damit ist es möglich, mit der zweiten Messeinrichtung die zweite y-Koordinate genau dann zu messen, wenn sich das Blechband im ersten Abstand dx1 stromabwärts der ersten y-Messeinrichtung befindet.

Nach einer weiteren vorteilhaften Ausgestaltung umfasst das erfindungsgemäße Verfahren gemäß dem ersten Aspekt die folgenden weiteren Schritte:

Bestimmen einer dritten y-Koordinate y3 des Punkts der Oberfläche des Blechbands in einem vorgegebenen zweiten Abstand dx2 vom Ort der Bestimmung der zweiten y-Koordinate y2,

Ermitteln eines zweiten y-Korrekturwerts $K_y2$ durch Bildung einer Differenz zwischen der zweiten y2 und der dritten y-Koordinate y3 und

Korrektur der den vorgegebenen Schneidweg beschreibenden Schneidweg-Koordinaten unter Berücksichtigung einer Änderung des zweiten y-Korrekturwerts $K_y2$ bezüglich des ersten y-Korrekturwerts $K_y1$ über dem Transportweg oder der Zeit.

Nach der vorgeschlagenen Ausgestaltung wird eine weitere Änderung der Lage des beobachteten Punkts auf dem Blechband stromabwärts der zweiten y-Messeinrichtung beobachtet. Am Ort der Beobachtung ist die Lage des Punkts durch dritte Ortskoordinaten x3y3 definiert. Aus einem Vergleich der ersten Ortskoordinaten x1y1, der zweiten Ortskoordinaten x2y2 sowie der dritten Ortskoordinaten x3y3 kann darauf geschlossen werden, ob das Blechband eine Säbeligkeit aufweist und, falls das der Fall ist, wie groß der Radius der Säbeligkeit ist. Es ist damit möglich, einen zweiten y-Korrekturwert $K_y2$ zu ermitteln, mit dem zusätzlich die Säbeligkeit des Bands berücksichtigt wird. Damit ist eine noch genauere Korrektur der Koordinaten des Schneidwegs möglich.

Nach einer vorteilhaften Ausgestaltung umfasst das Verfahren den folgenden weiteren Schritt:
Bereitstellen einer dritten y-Messeinrichtung zur Messung der dritten y-Koordinate y3 des Blechbands bezüglich der y-Referenz, wobei die dritte y-Messeinrichtung im vorgegebenen zweiten Abstand dx2 stromabwärts der zweiten y-Messeinrichtung angeordnet ist.

Durch die vorgeschlagene Anordnung einer ersten, zweiten und dritten y-Messeinrichtung aufeinanderfolgend in Transportrichtung jeweils in definierten ersten dx1 und zweiten Abständen dx2 lässt sich insbesondere in Kombination mit der ersten Wegmesseinrichtung genau die Position eines Punkts auf dem Blechband sowie dessen Lageänderung nach einer Bewegung des Blechbands um den ersten dx1 sowie den zweiten Abstand dx2 bestimmen.

Nach einem zweiten Aspekt der Erfindung wird ein Verfahren zur Korrektur eines vorgegebenen Schneidwegs zum Schneiden einer Blechplatine aus einem in eine Transportrichtung x kontinuierlich transportierten Blechband mit folgenden Schritten vorgeschlagen:

Gleichzeitiges Bestimmen einer ersten x-Koordinate x1 und einer ersten y-Koordinate y1 eines ersten Punkts einer Oberfläche des Blechbands bezüglich einer x- und einer y-Referenz mittels einer Bandfluss-Messeinrichtung,

gleichzeitiges Bestimmen einer zweiten x-Koordinate x2 und einer zweiten y-Koordinate y2 des ersten Punkts der Oberfläche des Blechbands bezüglich der x- und der y-Referenz mittels der Bandfluss-Messeinrichtung, wenn das Blechband um einen vorgegebenen dritten Abstand dx3 in Transportrichtung x bewegt worden ist,

Ermitteln eines dritten y-Korrekturwerts $K_y3$ unter Verwendung eines von der Bandfluss-Messeinrichtung aus den Koordinatenpaaren x1y1 und x2y2 ermittelten Vektors, und

Korrektur von den vorgegebenen Schneidweg beschreibenden Schneidweg-Koordinaten unter Verwendung des dritten y-Korrekturwerts $K_y3$.

Nach dem zweiten Aspekt der Erfindung wird zumindest ein Punkt einer Oberfläche des Blechbands, d. h. ein durch das Material des Blechbands gebildeter Punkt an der Oberfläche, beobachtet. Bei dem Punkt kann es sich z. B. um eine optisch erkennbare Höhen- und/oder Materialanomalie handeln. Es werden gleichzeitig die Ortskoordinaten x1y1 des Punkts bezüglich der x- und der y-Referenz mittels einer Bandfluss-Messeinrichtung ermittelt. Zu einem späteren Zeitpunkt, nämlich wenn das Blechband um einen vorgegebenen dritten Abstand dx3 in Transportrichtung bewegt worden ist, werden die zweiten Ortskoordinaten x2y2 des Punkts bezüglich der x- und der y-Referenz ermittelt. Aus den vorgenannten Koordinatenpaaren x1y1 und x2y2 wird sodann ein Vektor ermittelt. Auf der Grundlage des Vektors wird anschließend ein dritter y-Korrekturwert $K_y3$ berechnet, mit dem die den vorgegebenen Schneidweg beschreibenden Schneidweg-Koordinaten schließlich korrigiert werden. Die vorgeschlagene Ermittlung eines Vektors ermöglicht eine schnelle Berechnung des dritten y-Korrekturwerts sowie eine schnelle Korrektur der Schneidweg-Koordinaten. Der Vektor kann mit einer hohen Taktfrequenz wiederholend erzeugt werden. Das ermöglicht eine schnelle und besonders präzise Korrektur der Schneidweg-Koordinaten.

Nach einer vorteilhaften Ausgestaltung umfasst das Verfahren nach dem zweiten Aspekt den folgenden weiteren Schritt:

Messen einer vierten y-Koordinate y4 des Punkts der Oberfläche des Blechbands mittels einer in einem vorgegebenen vierten Abstand dx4 von der Bandfluss-Messeinrichtung angeordneten vierten y-Messeinrichtung und dynamisches Korrigieren des dritten y-Korrekturwerts $K_y3$ unter Verwendung der vierten y-Koordinate y4.

Die Messung der vierten y-Koordinate y4 ermöglicht ein Erkennen einer Säbeligkeit des Blechbands, insbesondere eines Radius der Säbeligkeit. Damit ist es möglich, den dritten y-Korrekturwert $K_y3$ unter Einbeziehung der Säbeligkeit des Blechbands dynamisch zu korrigieren. Das ermöglicht eine besonders genaue Korrektur der den Schneidweg beschreibenden Schneidweg-Koordinaten.

Nach einer weiteren vorteilhaften Ausgestaltung wird eine vierte x-Koordinate x4 des Punkts der Oberfläche des Blechbands mittels einer zweiten Wegmesseinrichtung gemessen und die vierte x-Koordinate x4 wird zur dynamischen Korrektur des dritten y-Korrekturwerts $K_y3$ verwendet. Das ermöglicht eine besonders exakte Bestimmung des vierten Abstands dx4 und damit eine besonders exakte Bestimmung der vierten y-Koordinate y4.

Das erste Koordinatenpaar x1y1 wird vorteilhafterweise aus einer mit der Bandfluss-Messeinrichtung zu einem Zeitpunkt t1 erfassten Oberflächenstruktur bestimmt. Die Oberflächenstruktur kann aus einem zum Zeitpunkt t1 hergestellten zwei- oder dreidimensionalen Oberflächenbild ermittelt werden. Das zweite Koordinatenpaar x2y2 kann aus einer mit der Bandfluss-Messeinrichtung zu einem auf den Zeitpunkt t1 folgenden zweiten Zeitpunkt tn erfassten weiteren Oberflächenstruktur berechnet werden. Durch einen Vergleich der zum Zeitpunkt t1 erfassten Oberflächenstruktur mit einer später erfassten weiteren Oberflächenstruktur kann die Lageänderung des Punkts P bestimmt werden. Die Lageänderung des Punkts P kann durch einen Vektor mit den Anfangskoordinaten x1y1 und den Endkoordinaten x2y2 beschrieben werden. Der Vektor kann insbesondere nach dem Verfahren der Bildkorrelation ermittelt werden.

Zur Herstellung des Oberflächenbilds kann eine Bandfluss-Messeinrichtung verwendet werden, welche eine der folgenden Komponenten umfasst: Kamera, vorzugsweise optischer Maus-Sensor, optischer Bewegungssensor, Abstandssensor, vorzugsweise konfokalchromatischer Abstandssensor, Schlepprad mit Winkelgeber. Die vorgenannten Bandfluss-Messeinrichtungen ermöglichen die für das erfindungsgemäße Verfahren erforderliche Bestimmung der Ortskoordinaten xy des Punkts P sowie deren Veränderung über der Zeit oder dem Weg.

Der Punkt kann sich auf einer Bandkante, einer Schnittkante oder einer Ober- oder Unterseite des Blechbands befinden. Nach dem ersten Aspekt der Erfindung befindet sich der Punkt vorteilhafterweise auf einer Bandkante, nach dem zweiten Aspekt der Erfindung vorteilhafterweise auf einer Oberseite des Blechbands.

Nachfolgend werden Ausführungsbeispiele der Erfindung anhand der Zeichnungen näher erläutert. Es zeigen:

Fig. 1 die Bestimmung der ersten Ortskoordinaten x1y1 des Punkts P,

Fig. 2 die Bestimmung der zweiten Ortskoordinaten x2y2 des Punkts P,

Fig. 3 die Bestimmung der dritten Ortskoordinaten x3y3 des Punkts P,

Fig. 4 eine schematische Ansicht einer Messanordnung zur Bestimmung der Ortskoordinaten nach dem zweiten Aspekt der Erfindung,

Fig. 5 die Bestimmung der ersten Ortskoordinaten x1y1 mittels der Bandfluss-Messeinrichtung gemäß Fig. 4, und

Fig. 6 die Bestimmung der zweiten Ortskoordinaten x2y2 mittels der Bandfluss-Messeinrichtung gemäß Fig. 4.

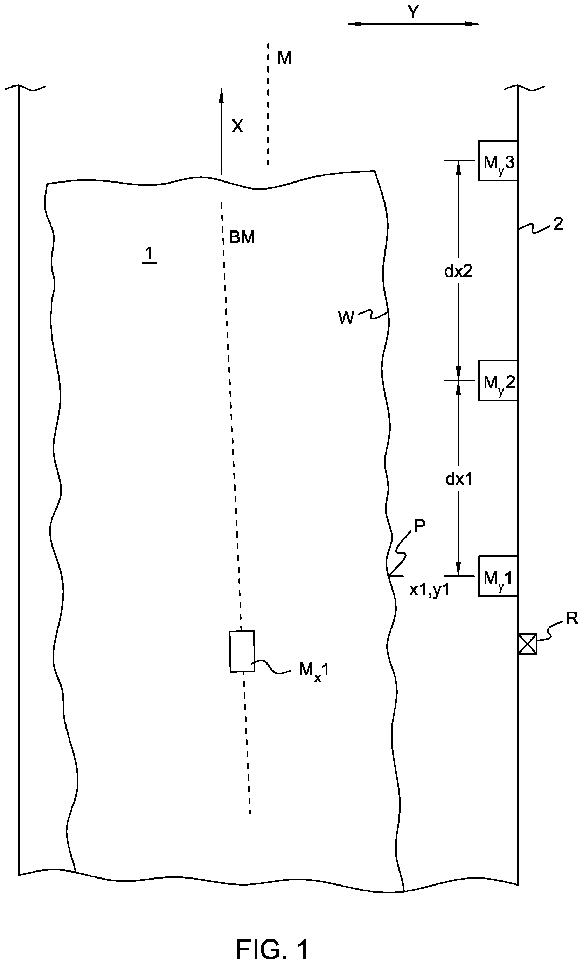

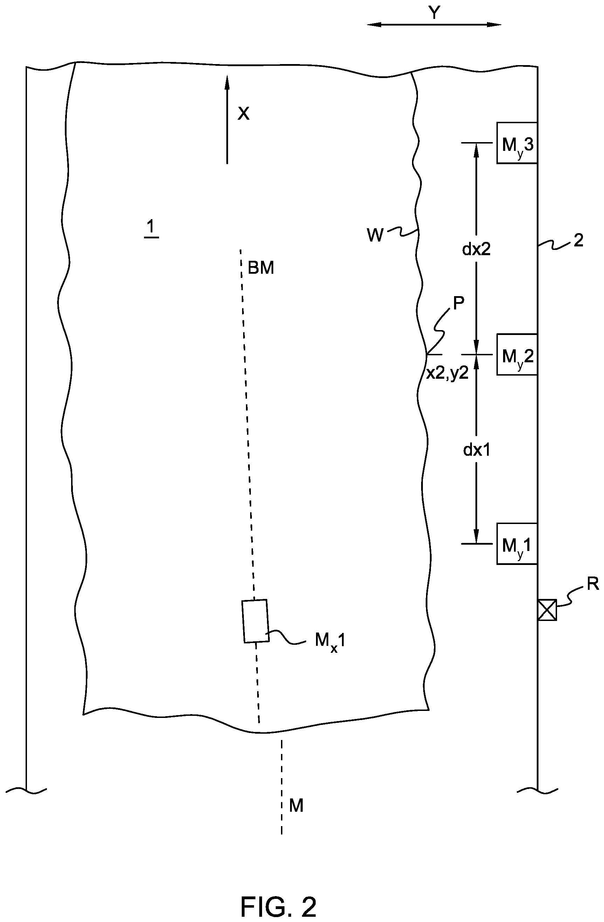

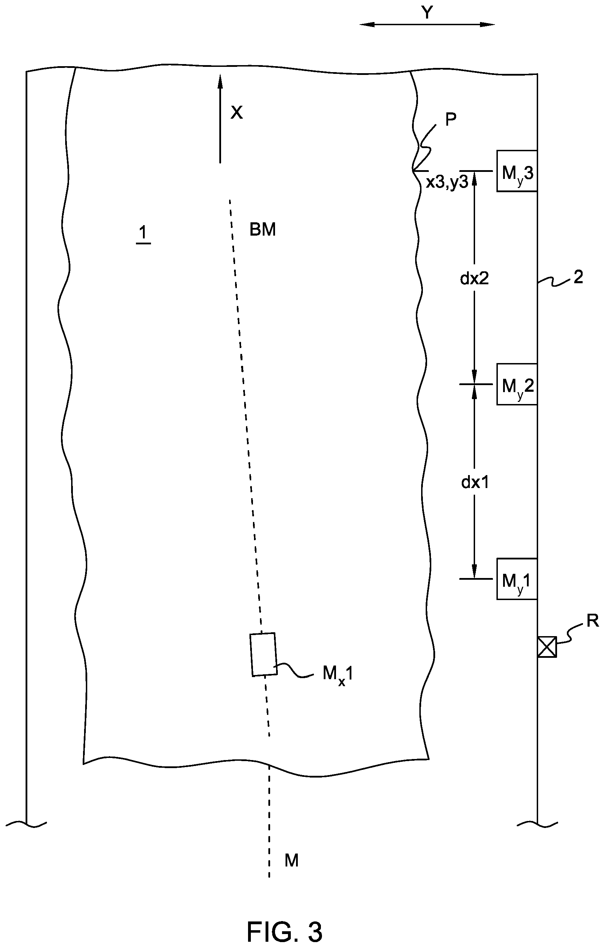

In den Fig. 1 bis 4 ist ein in einer Transportrichtung x kontinuierlich transportiertes Blechband mit dem Bezugszeichen 1 bezeichnet. Mit dem Bezugszeichen 2 ist allgemein ein Rahmen einer Vorrichtung bezeichnet, welche zum Transport des Blechbands 1 (hier nicht gezeigte) Transportbänder, Transportwalzen, eine Walzenrichtmaschine oder dgl. umfassen kann. Stromabwärts des in den Fig. 1 bis 4 gezeigten Abschnitts der Vorrichtung ist eine (hier nicht gezeigte) Laserschneidvorrichtung zum Schneiden des Blechbands 1 in Blechplatinen mit einer vorgegebenen Geometrie angeordnet. Die Laserschneidvorrichtung umfasst in herkömmlicher Weise einen oder mehrere Laser, welche jeweils in der Transportrichtung x sowie einer senkrecht dazu verlaufenden Querrichtung y bewegbar sind. Zum Bewegen jedes der Laser in x- und y-Richtung können beispielsweise elektrische Stellmotoren vorgesehen sein. Zur Steuerung derartiger Stellmotoren ist üblicherweise ein Computer vorgesehen, in dem einen vorgegebenen Schneidweg beschreibende Schneidweg-Koordinaten zur Bewegung jedes der Laser gespeichert sind. Die Schneidweg-Koordinaten beschreiben einen Schneidweg bezüglich einer Mittelebene der Vorrichtung, d. h. beispielsweise einer in xy-Richtung verlaufenden Mittelebene M des Rahmens 2.

In der Praxis kommt es vor, dass beim Transport des Blechbands 1 dessen Bandmittel BM nicht in Übereinstimmung mit der Mittelebene M der Schneidvorrichtung ist. In diesem Fall kann es vorkommen, dass der vorgegebene Schneidweg über den Rand des Blechbands 1 hinausgeht und infolgedessen die Blechplatine nicht die vorgegebene Geometrie aufweist. Um dem entgegenzuwirken werden die den Schneidweg beschreibenden Schneidweg-Koordinaten erfindungsgemäß ständig so korrigiert, dass sie sich auf die tatsächliche Lage der Bandmitte BM beziehen.

Zu diesem Zweck kann nach einer ersten Verfahrensvariante, welche in den Fig. 1 bis 3 schematisch gezeigt ist, ein Punkt P an der einen Kante des Blechbands 1 mittels einer ersten y-Messeinrichtung $M_y1$ erfasst werden. Mit der ersten y-Messeinrichtung $M_y1$ wird ein Abstand des Punkts P in y-Richtung bezüglich einer fest am Rahmen 2 angebrachten y-Referenz R gemessen. Zeitgleich wird mit einer ersten Wegmesseinrichtung $M_x1$ eine erste x-Koordinate x1 des Punkts P bezüglich der Referenz R bestimmt. Die ersten Ortskoordinaten x1y1 des Punkts P werden gespeichert.

In einem ersten Abstand dx1 stromabwärts der ersten y-Messeinrichtung $M_y1$ ist in einem ersten Abstand dx1 eine zweite y-Messeinrichtung $M_y2$ angeordnet. Sobald mittels der ersten Wegmesseinrichtung $M_x1$ eine Fortbewegung des Blechbands 1 in Transportrichtung x um den Abstand dx1 erfasst worden ist, wird mit der zweiten y-Messeinrichtung $M_y2$ eine zweite y-Koordinate y2 aus dem Abstand zum Rand des Blechbands 1 bestimmt. Infolgedessen beschreiben die ersten Ortskoordinaten x1y1 und die zweiten Ortskoordinaten x2y2 jeweils exakt die Lage desselben Punkts P auf der Kante des Blechbands 1.

Wie aus den Fig. 1 bis 4 ersichtlich ist, weist die Kante des Blechbands 1 eine Randwelligkeit W auf. Durch die Beobachtung der Lageveränderung ein und desselben Punkts P, welche durch die zeitgleiche Erfassung der jeweiligen x- und y-Koordinaten ermöglicht wird, wird die Gefahr einer durch die Randwelligkeit W verursachten Ungenauigkeit bei der Ermittlung des Korrekturwerts vermieden.

Aus der Differenz zwischen der ersten y1 und der zweiten y-Koordinate y2 kann ein erster y-Korrekturwert $K_y1$ ermittelt werden. Unter Verwendung des ersten y-Korrekturwerts $K_y1$ können die y-Koordinaten der Schneidweg-Koordinaten korrigiert werden.

Aus einem Vergleich der ersten y-Koordinate y1 und der zweiten y-Koordinate y2 kann eine Schräglage der Bandmitte BM bezüglich der Mittelebene M ermittelt und korrigiert werden. Nicht erkannt werden kann dagegen, ob das Blechband 1 eine Säbeligkeit, d. h. eine Krümmung mit einem großen Radius, aufweist. Zur Erkennung einer solchen Säbeligkeit kann stromabwärts der zweiten y-Messeinrichtung $M_y2$ in einem zweiten Abstand dx2 eine dritte y-Messeinrichtung $M_y3$ vorgesehen sein. Vorteilhafterweise gilt:

$$dx1 = dx2$$

In diesem Fall ist es möglich, die erste Wegmesseinrichtung $M_x1$ und die y-Messeinrichtungen $M_y1$, $M_y2$ und $M_y3$ im selben Takt zu betreiben.

Sobald mit der ersten Wegmesseinrichtung $M_x1$ festgestellt worden ist, dass sich das Blechband 1 um den zweiten Abstand dx2 in Transportrichtung x bewegt hat, wird mittels der dritten y-Messeinrichtung $M_y3$ eine dritte y-Koordinate y3 bestimmt, indem der Abstand des Punkts P zur dritten y-Messeinrichtung $M_y3$ gemessen wird. Aus der Differenz zwischen der zweiten y-Koordinate y2 und der dritten y-Koordinate y3 kann im Vergleich zur Differenz zwischen der ersten y-Koordinate y1 und der zweiten y-Koordinate y2 erkannt werden, ob eine Säbeligkeit vorliegt. Ferner kann deren Richtung und deren Betrag erkannt werden. Es gilt:

$$y1 - y2 = \Delta 1$$

$$y2 - y3 = \Delta 2$$

Eine Säbeligkeit des Blechbands 1 liegt nicht vor, wenn:

$$\Delta 1 = \Delta 2$$

Eine Säbeligkeit liegt dagegen vor, wenn:

$$\Delta 1 \neq \Delta 2$$

Aus der Differenz

$$\Delta 1 - \Delta 2 = \Delta 3$$

kann auf den Radius der Säbeligkeit geschlossen werden. Aus dem Vorzeichen der Differenz $\Delta 3$ kann außerdem auf die Richtung der Säbeligkeit bzw. Krümmung der Kante des Blechbands 1 geschlossen werden.

Die vorgenannten Beziehungen gelten bei dx1 = dx2. Falls dx1 nicht gleich dx2 ist, sind die vorgenannten Beziehungen unter Verwendung eines sich aus dem Verhältnis zwischen dx1 und dx2 ergebenden Faktors anzupassen.

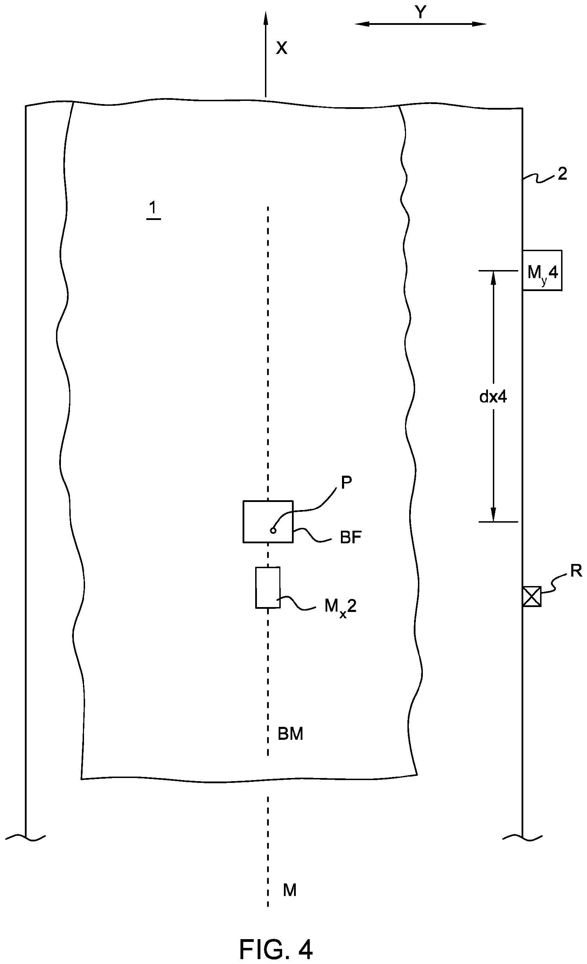

Die Fig. 4 bis 6 zeigen schematisch eine zweite Variante des erfindungsgemäßen Verfahrens. Dabei ist stromaufwärts einer mit dem Bezugszeichen BF bezeichneten Bandfluss-Messeinrichtung eine zweite Wegmesseinrichtung $M_x2$ angeordnet.

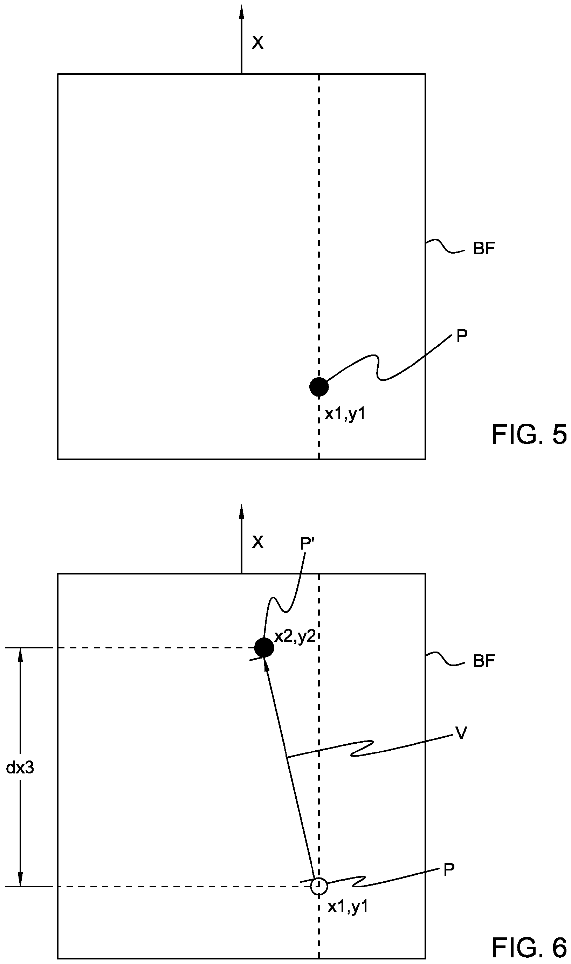

Die Fig. 5 und 6 zeigen schematisch die Funktion der Bandfluss-Messeinrichtung BF. Bei der Bandfluss-Messeinrichtung BF kann es sich beispielsweise um eine Einrichtung handeln, welche ähnlich einem optischen Maus-Sensor ausgestaltet ist. Mittels einer Kamera, beispielsweise einer 18x18 CCD, wird eine den Punkt P enthaltende Oberflächenstruktur der Oberfläche des Blechbands 1 erfasst. Bei dem Punkt P kann es sich beispielsweise um einen Ausbruch an der Oberfläche des Blechbands 1 handeln, welcher im von der Kamera erfassten Bild dunkel erscheint. Wenn das Blechband 1 in Transportrichtung x um einen Abstand dx3 bewegt worden ist, wird mittels der Kamera ein weiteres Bild von der Oberflächenstruktur des Blechbands 1 aufgenommen. Es werden die zweiten Ortskoordinaten x2y2 des Punkts P ermittelt. Mittels eines Bildkorrelationsverfahrens oder dgl. kann sodann der Vektor V bestimmt werden, welcher die Geschwindigkeit und die Richtung der Bewegung des Punkts P beschreibt.

Zur Erhöhung der Genauigkeit bei der Bestimmung des Vektors V können nicht nur zwei Bilder der Oberflächenstruktur aufgenommen werden, welche den Punkt P enthalten, sondern eine Vielzahl von Bildern. Der dritte Abstand dx3 beträgt beispielsweise 0,1 bis 3,0 mm. Gleichwohl werden mit dem Vektor ein ersten Koordinatenpaar x1y1 sowie ein zweites Koordinatenpaar x2y2 definiert.

Aus dem Vektor V lassen sich mittels herkömmlicher Rechenverfahren insbesondere die Koordinatenpaare x1y1 sowie x2y2 und daraus wiederum der dritte y-Korrekturwert $K_y3$ ermitteln. - Ähnlich wie beim ersten Aspekt der Erfindung kann auch beim zweiten Aspekt der Erfindung zur Bestimmung der Säbeligkeit des Blechbands stromabwärts der Bandfluss-Messeinrichtung BF in einem vierten Abstand dx4 eine vierte y-Messeinrichtung $M_y4$ vorgesehen sein. Unter Verwendung der vierten y-Messeinrichtung $M_y4$ kann der dritte y-Korrekturwert $K_y3$ unter Verwendung einer damit ermittelten vierten y-Koordinate y4 korrigiert werden. Mit der vierten y-Messeinrichtung $M_y4$ kann ständig die Position, beispielsweise der Bandkante des Blechbands 1, gemessen und daraus eine Drift der y-Werte bestimmt werden. Unter Verwendung der gemessenen Drift kann bei bekanntem vierten Abstand dx4 der mittels der Bandfluss-Messeinrichtung BF ermittelte dritte y-Korrekturwert $K_y3$ dynamisch korrigiert werden.

Bezugszeichenliste

1    Blechband
2    Rahmen

BF    Bandfluss-Messeinrichtung
BM    Bandmitte
dx1    erster Abstand
dx2    zweiter Abstand
dx3    dritter Abstand
dx4    vierter Abstand
$K_y1$    erster y-Korrekturwert
$K_y2$    zweiter y-Korrekturwert
$K_y3$    dritter y-Korrekturwert

| M | Mittelebene |
|---|---|
| $M_x1$ | erste Wegmesseinrichtung |
| $M_x2$ | zweite Wegmesseinrichtung |
| $M_y1$ | erste y-Messeinrichtung |
| $M_y2$ | zweite y-Messeinrichtung |
| $M_y3$ | dritte y-Messeinrichtung |
| $M_y4$ | vierte y-Messeinrichtung |
| P | Punkt |
| R | Referenz |
| V | Vektor |
| W | Randwelligkeit |
| x1y1 | erstes Koordinatenpaar |
| x2y2 | zweites Koordinatenpaar |
| y1 | erste y-Koordinate |
| y2 | zweite y-Koordinate |
| y3 | dritte y-Koordinate |
| y4 | vierte y-Koordinate |

**Patentansprüche**

1. Verfahren zur Korrektur eines vorgegebenen Schneidwegs zum Schneiden einer Blechplatine aus einem in eine Transportrichtung x kontinuierlich transportierten Blechband (1) mit folgenden Schritten:

   Gleichzeitiges Erfassen einer ersten x-Koordinate x1 und einer ersten y-Koordinate y1 eines beliebigen Punkts (P) einer Oberfläche des Blechbands (1) bezüglich einer x- und y-Referenz, wobei der beliebige Punkt (P) keine auf dem Blechband (1) angebrachte gesonderte Markierung ist,
   Erfassen einer zweiten Koordinate y2 des Punkts (P) bezüglich der y-Referenz genau dann, wenn das Blechband (1) bezüglich der ersten x-Koordinate x1 um einen vorgegebenen ersten Abstand dx1 in Transportrichtung x bewegt worden ist,
   Ermitteln eines ersten y-Korrekturwerts $K_y1$ durch Bildung einer Differenz zwischen der ersten y1 und der zweiten y-Koordinate y2, und Korrektur von den vorgegebenen Schneidweg beschreibenden Schneidweg-Koordinaten unter Verwendung des ersten y-Korrekurwerts $K_y1$.

2. Verfahren nach Anspruch 1, umfassend die folgenden weiteren Schritte:

   Bereitstellen einer ersten y-Messeinrichtung ($M_y1$) zur Messung der ersten y-Koordinate y1 des Blechbands (1) bezüglich der y-Referenz, Bereitstellen einer zweiten y-Messeinrichtung ($M_y2$) zur Messung der zweiten y-Koordinate y2 des Blechbands (1) bezüglich der y-Referenz, wobei die zweite y-Messeinrichtung ($M_y2$) im

vorgegebenen ersten Abstand dx1 stromabwärts der ersten y-Messeinrichtung ($M_y1$) angeordnet ist, und
   Bereitstellen einer ersten Wegmesseinrichtung ($M_x1$) zur Messung der x-Koordinaten des Blechbands (1) bezüglich der x-Referenz.

3. Verfahren nach einem der vorhergehenden Ansprüche, umfassend die folgenden weiteren Schritte:

   Erfassen einer dritten y-Koordinate y3 des Punkts (P) der Oberfläche des Blechbands (1) in einem vorgegebenen zweiten Abstand dx2 vom Ort der Bestimmung der zweiten y-Koordinate y2,
   Ermitteln eines zweiten y-Korrekturwerts $K_y2$ durch Bildung einer Differenz zwischen der zweiten y2 und der dritten y-Koordinate y3, und Korrektur der den vorgegebenen Schneidweg beschreibenden Schneidweg-Koordinaten unter Berücksichtigung der Änderung des zweiten y-Korrekturwerts $K_y2$ bezüglich des ersten y-Korrekturwerts $K_y1$ über dem Transportweg oder der Zeit.

4. Verfahren nach Anspruch 3, umfassend den folgenden weiteren Schritt:
   Bereitstellen einer dritten y-Messeinrichtung ($M_y3$) zur Messung der dritten y-Koordinate y3 des Blechbands (1) bezüglich der y-Referenz, wobei die dritte y-Messeinrichtung im vorgegebenen zweiten Abstand dx2 stromabwärts der zweiten y-Messeinrichtung ($M_y2$) angeordnet ist.

5. Verfahren zur Korrektur eines vorgegebenen Schneidwegs zum Schneiden einer Blechplatine aus einem in eine Transportrichtung x kontinuierlich transportierten Blechband (1) mit folgenden Schritten:

   Gleichzeitiges Erfassen einer ersten x-Koordinate x1 und einer ersten y-Koordinate y1 eines beliebigen Punkts (P) einer Oberfläche des Blechbands (1) bezüglich einer x- und einer y-Referenz, wobei der beliebige Punkt (P) keine auf dem Blechband (1) angebrachte gesonderte Markierung ist, mittels einer Bandfluss-Messeinrichtung (BF), welche eine Bestimmung der Ortskoordinaten xy des Punkts (P) sowie deren Veränderung über der Zeit oder dem Weg ermöglicht,
   gleichzeitiges Erfassen einer zweiten x-Koordinate x2 und einer zweiten y-Koordinate y2 des Punkts (P) der Oberfläche des Blechbands (1) bezüglich der x- und der y-Referenz mittels der Bandfluss-Messeinrichtung (BF), wenn das Blechband (1) um einen vorgegebenen dritten Abstand dx3 in Transportrichtung x bewegt worden ist,
Ermitteln eines dritten y-Korrekturwerts $K_y3$ unter Verwendung eines von der Bandfluss-Messeinrichtung (BF) aus den Koordinatenpaaren x1y1 und x2y2 ermittelten Vektors (V), und Korrektur von den vorgegebenen Schneidweg beschreibenden Schneidweg-Koordinaten unter Verwendung des dritten y-Korrekturwerts $K_y3$.

6.  Verfahren nach Anspruch 5, umfassend den folgenden weiteren Schritt:
    Messen einer vierten y-Koordinate y4 des Punkts (P) der Oberfläche des Blechbands (1) mittels einer in einem vorgegebenen vierten Abstand dx4 von der Bandfluss-Messeinrichtung (BF) angeordneten vierten y-Messeinrichtung ($M_y4$) und Korrigieren des dritten y-Korrekturwerts $K_y3$ unter Verwendung der vierten y-Koordinate y4.

7.  Verfahren nach Anspruch 5 oder 6, umfassend den folgenden weiteren Schritt:
    Messen einer vierten x-Koordinate x4 des Punkts (P) der Oberfläche des Blechbands (1) mittels einer zweiten Wegmesseinrichtung ($M_x2$) und Verwenden der vierten x-Koordinate x4 zur Korrektur des dritten y-Korrekturwerts $K_y3$.

8.  Verfahren nach einem der Ansprüche 5 bis 7, wobei das erste Koordinatenpaar x1y1 aus einer mit der Bandfluss-Messeinrichtung (BF) zu einem Zeitpunkt t1 erfassten Oberflächenstruktur bestimmt wird.

9.  Verfahren nach Anspruch 8, wobei die Oberflächenstruktur aus einem zum Zeitpunkt t1 hergestellten 2- oder 3-dimensionalen Oberflächenbild ermittelt wird.

10. Verfahren nach einem der Ansprüche 8 oder 9, wobei das zweite Koordinatenpaar x2y2 aus einer mit der Bandfluss-Messeinrichtung (BF) zu einem auf den Zeitpunkt t1 folgenden weiteren Zeitpunkt tn erfassten weiteren Oberflächenstruktur berechnet wird.

11. Verfahren nach einem der Ansprüche 8 bis 10, wobei zur Herstellung des Oberflächenbilds eine Bandfluss-Messeinrichtung (BF) verwendet wird, welche eine der folgenden Komponenten umfasst: Kamera, optischer Maus-Sensor, Abstandssensor, konfokalchromatischer Abstandssensor.

**Claims**

1.  A method for correcting a predetermined cutting path for cutting a metal blank from a metal strip (1) continuously transported in a transport direction x, with the following steps:

    Simultaneously determining a first x coordinate x1 and a first y coordinate y1 of an arbitrary point (P) on a surface of the metal strip (1) with respect to an x and a y reference, the arbitrary point (P) not being a separate mark put on the metal strip (1);
    Determining a second coordinate y2 of the point (P) with respect to the y reference at precisely the time when the metal strip (1) has been moved in the transport direction x by a predetermined first distance dx1 with respect to the first x coordinate x1;
    Determining a first y correction value $K_y1$ by taking the difference between the first y coordinate y1 and the second y coordinate y2; and
    Using the first y correction value $K_y1$ to correct the cutting path coordinates describing the predetermined cutting path.

2.  A method according to claim 1, comprising the following further steps:

    Providing a first y measurement device ($M_y1$) to measure the first y coordinate y1 of the metal strip (1) with respect to the y reference;
    Providing a second y measurement device ($M_y2$) to measure the second y coordinate y2 of the metal strip (1) with respect to the y reference, the second y measurement device ($M_y2$) being arranged at the predetermined first distance dx1 downstream of the first y measurement device ($M_y1$); and
    Providing a first displacement measurement device ($M_x1$) to measure the x coordinates of the metal strip (1) with respect to the x reference.

3.  The process according to any one of the preceding claims, comprising the following further steps:

    Determining a third y coordinate y3 of the point (P) on the surface of the metal strip (1) at a predetermined second distance dx2 from the place of determination of the second y coordinate y2;
    Determining a second y correction value $K_y2$ by taking the difference between the second y coordinate y2 and the third y coordinate y3; and
    Correcting the cutting path coordinates describing the predetermined cutting path by taking into consideration the change in the second y correction value $K_y2$ with respect to the first y correction value $K_y1$ over the transport path or over time.

4.  A method according to claim 3, comprising the following further step:
    Providing a third y measurement device ($M_y3$) to

measure the third y coordinate y3 of the metal strip (1) with respect to the y reference, the third y measurement device being arranged at the predetermined second distance dx2 downstream of the second y measurement device ($M_y2$).

**5.** A method for correcting a predetermined cutting path for cutting a metal blank from a metal strip (1) continuously transported in a transport direction x, with the following steps:

Simultaneously determining a first x coordinate x1 and a first y coordinate y1 of an arbitrary point (P) of a surface of the metal strip (1) with respect to an x and a y reference, the arbitrary point (P) not being a separate mark put on the metal strip (1), this determination being done by means of a strip flow measuring device (BF), which allows a determination of the positional coordinates xy of the point (P) and their change over time or travel;
Simultaneously determining a second x coordinate x2 and a second y coordinate y2 of the point (P) of the surface of the metal strip (1) with respect to the x and y reference by means of the strip flow measuring device (BF), if the metal strip (1) has been moved in the transport direction x by a predetermined third distance dx3;
Determining a third y correction value $K_y3$ using a vector (V) determined by the strip flow measuring device (BF) from the coordinate pairs x1y1 and x2y2; and
Using the third y correction value $K_y3$ to correct the cutting path coordinates describing the predetermined cutting path.

**6.** A method according to claim 5, comprising the following further step:
Measuring a fourth y coordinate y4 of the point (P) on the surface of the metal strip (1) by means of a fourth y measurement device ($M_y4$) arranged at a predetermined fourth distance dx4 from the strip flow measuring device (BF) and correcting the third y correction value $K_y3$ using the fourth y coordinate y4.

**7.** A method according to claim 5 or 6, comprising the following further step:
Measuring a fourth x coordinate x4 of the point (P) on the surface of the metal strip (1) by means of a second displacement measurement device ($M_x2$) and using the fourth x coordinate x4 for correction of the third y correction value $K_y3$.

**8.** A method according to any one of claims 5 through 7, wherein the first coordinate pair x1y1 is determined from a surface structure detected at a time point t1 with the strip flow measuring device (BF).

**9.** A method according to claim 8, wherein the surface structure is determined from a 2- or 3-dimensional surface image produced at time point t1.

**10.** A method according to one claims 8 or 9, wherein the second coordinate pair x2y2 is calculated from another surface structure detected at another time point tn following the time point t1 with the strip flow measuring device (BF).

**11.** A method according to any one claims 8 through 10, wherein the surface image is produced using a strip flow measuring device (BF), which comprises one of the following components: a camera, an optical mouse sensor, a distance sensor, or a confocal chromatic distance sensor.

**Revendications**

**1.** Procédé de correction d'une trajectoire de coupe prédéfinie pour découper un larget dans un feuillard (1) transporté en continu dans une direction de transport x, comprenant les étapes suivantes consistant à :

détecter simultanément une première coordonnée x x1 et une première coordonnée y y1 d'un point quelconque (P) d'une surface du feuillard (1) par rapport à une référence x et une référence y, en ce que le point quelconque (P) n'est pas un marquage apposé séparément sur le feuillard (1),
détecter une deuxième coordonnée y2 du point (P) par rapport à la référence y au moment précis où le feuillard (1) par rapport à la première coordonnée x x1 a été déplacé à raison d'une première distance prédéfinie dx1 dans la direction de transport x,
déterminer une première valeur de correction y $K_y1$ par formation d'une différence entre la première coordonnée y y1 et la deuxième coordonnée y y2, et
corriger les coordonnées de la trajectoire de coupe décrivant la trajectoire de coupe prédéfinie en utilisant la première valeur de correction y $K_y1$.

**2.** Procédé selon la revendication 1, comprenant les autres étapes suivantes consistant à:

mettre à disposition un premier dispositif de mesure y ($M_y1$) pour mesurer la première coordonnée y y1 du feuillard (1) par rapport à la référence y,
mettre à disposition un deuxième dispositif de mesure y ($M_y2$) pour mesurer la deuxième coordonnée y y2 du feuillard (1) par rapport à la référence y, le deuxième dispositif de mesure y (M$_y$2) étant disposé à la première distance prédéfinie dx1 en aval du premier dispositif de mesure y (M$_y$1), et

mettre à disposition un premier dispositif de mesure de déplacement (M$_x$1) pour mesurer les coordonnées x du feuillard (1) par rapport à la référence x.

**3.** Procédé selon l'une des revendications précédentes, comprenant les autres étapes suivantes consistant à :

détecter une troisième coordonnée y y3 du point (P) de la surface du feuillard (1) à une deuxième distance dx2 prédéfinie du lieu de détermination de la deuxième coordonnée y y2,

déterminer une deuxième valeur de correction y K$_y$2 par formation d'une différence entre la deuxième coordonnée y y2 et la troisième coordonnée y y3, et

corriger les coordonnées de la trajectoire de coupe décrivant la trajectoire de coupe prédéfinie en tenant compte de la modification de la deuxième valeur de correction y K$_y$2 par rapport à la première valeur de correction y K$_y$1 selon la trajectoire ou le temps.

**4.** Procédé selon la revendication 3, comprenant l'autre étape suivante consistant à :

mettre à disposition un troisième dispositif de mesure y (M$_y$3) pour mesurer la troisième coordonnée y y3 du feuillard (1) par rapport à la référence y, le troisième dispositif de mesure y étant disposé à la deuxième distance prédéfinie dx2 en aval du deuxième dispositif de mesure y (M$_y$2).

**5.** Procédé de correction d'une trajectoire de coupe prédéfinie pour découper un larget dans un feuillard (1) transporté en continu dans une direction de transport x, comprenant les étapes suivantes consistant à :

détecter simultanément une première coordonnée x x1 et une première coordonnée y y1 d'un point quelconque (P) d'une surface du feuillard (1) par rapport à une référence x et une référence y, en ce que le point quelconque (P) n'est pas un marquage apposé séparément sur le feuillard (1), au moyen d'un dispositif de mesure de cheminement de bande (BF), qui permet une détermination des coordonnées de position xy du point (P) ainsi que leur modification dans le temps ou la trajectoire,

détecter simultanément une deuxième coordonnée x x2 et une deuxième coordonnée y y2 d'un point (P) de la surface du feuillard (1) par rapport à une référence x et une référence y au moyen du dispositif de mesure de cheminement de bande (BF), lorsque le feuillard (1) a été déplacé d'une troisième distance prédéfinie dx3 dans la direction de transport x,

déterminer une troisième valeur de correction y K$_y$3 en utilisant un vecteur (V) déterminé à partir des paires de coordonnées x1y1 et x2y2 par le dispositif de mesure de cheminement de bande (BF), et

corriger les coordonnées de la trajectoire de coupe décrivant la trajectoire de coupe prédéfinie en utilisant la troisième valeur de correction y K$_y$3.

**6.** Procédé selon la revendication 5, comprenant l'autre étape suivante consistant à :

mesurer une quatrième coordonnée y y4 du point (P) de la surface du feuillard (1) au moyen d'un quatrième dispositif de mesure y (M$_y$4) disposé à une quatrième distance dx4 prédéfinie par le dispositif de mesure de cheminement de bande (BF) et corriger la troisième valeur de correction y K$_y$3 en utilisant la quatrième coordonnée y y4.

**7.** Procédé selon la revendication 5 ou 6, comprenant l'autre étape suivante consistant à :

mesurer une quatrième coordonnée x x4 du point (P) de la surface du feuillard (1) au moyen d'un deuxième dispositif de mesure de déplacement (Mx2) et utiliser la quatrième coordonnée x x4 pour la correction de la troisième valeur de correction y K$_y$3.

**8.** Procédé selon l'une des revendications 5 à 7, en ce que la première paire de coordonnées x1y1 est déterminée à partir d'une structure de la surface détectée à un moment t1 avec le dispositif de mesure de cheminement de bande (BF).

**9.** Procédé selon la revendication 8, en ce que la structure de la surface est déterminée à partir d'une image de surface bi- ou tridimensionnelle réalisée au moment t1.

**10.** Procédé selon l'une des revendications 8 ou 9, en ce que la deuxième paire de coordonnées x2y2 est calculée à partir d'une autre structure de la surface détectée à un autre moment subséquent au moment t1 avec le dispositif de mesure de cheminement de bande (BF).

**11.** Procédé selon l'une des revendications 8 à 10, en ce qu'un dispositif de mesure de cheminement de bande (BF) est utilisé pour la réalisation de l'image de surface, ledit dispositif comprenant l'un des composants suivants : caméra, capteur de souris optique, capteur de distance, capteur de distance confocal chromatique.

FIG. 1

FIG. 2

FIG. 3

FIG. 4

X

BF

P

x1,y1

FIG. 5

X

P'

x2,y2

BF

V

dx3

P

x1,y1

FIG. 6

**IN DER BESCHREIBUNG AUFGEFÜHRTE DOKUMENTE**

**In der Beschreibung aufgeführte Patentdokumente**

- DE 102013203384 A1
- WO 2009105608 A
- DE 102007042165 A1
- EP 0474034 A1